# EUROPÄISCHE PATENTSCHRIFT

(11) **EP 2 055 087 B1**
(45) Veröffentlichungstag und Bekanntmachung des Hinweises auf die Patenterteilung: **27.09.2017**
(21) Anmeldenummer: 07802874.3
(22) Anmeldetag: 24.08.2007
(51) Int. Cl.: H04M 3/42

(54) **VERFAHREN ZUM WEITERLEITEN VON NOTFALLNACHRICHTEN EINES ENDGERÄTES IN EINEM KOMMUNIKATIONSNETZ**
METHOD FOR FORWARDING EMERGENCY MESSAGES FROM A TERMINAL IN A COMMUNICATION NETWORK
PROCEDE POUR LA TRANSMISSION DE MESSAGES D'URGENCE D'UN TERMINAL DANS UN RESEAU DE COMMUNICATION

(30) Priorität: 24.08.2006 DE 102006039790
(43) Veröffentlichungstag der Anmeldung: 06.05.2009
(73) Patentinhaber: Siemens Aktiengesellschaft, 80333 München (DE)
(72) Erfinder: KRÖSELBERG, Dirk, 80469 München (DE); WISENÖCKER, Richard, A-1140 Wien (AT)
(86) Internationale Anmeldenummer: PCT/EP2007/058827
(87) Internationale Veröffentlichungsnummer: WO 2008/040597

(56) Entgegenhaltungen:
- US-A1- 2006 030 290

## Beschreibung

Die Erfindung betrifft ein Verfahren und ein System zum Weiterleiten von Notfallnachrichten in einem Kommunikationsnetz, insbesondere für WiMAX-Netze.

Um eine neue drahtlose Kommunikationstechnologie für mobile Endgeräte voranzutreiben, die auch größere Reichweiten von bis zu 30 km oder mehr (Sichtlinie) bei hohen Datendurchsätzen von 75 MB/s erreicht, haben sich mehrere Interessenten in dem so genannten WiMAX-Forum (www.WiMAXforum.org) zusammengeschlossen. Bei WiMAX (Worldwide Interoperability for Microwave Access) sind drei Frequenzbänder um 2,6 GHz, 3,5 GHz und 5,8 GHz mit Frequenzbreiten von 100 bis 200 MHz vorgesehen. WiMAX unterstützt Mobile-IP (Internet Protokoll) und ermöglicht somit mobilen Endgeräten beispielsweise über Voice-over-IP mit anderen Kommunikationsteilnehmern zu telefonieren.

Eine Anforderung an zukünftige WiMAX-Netze ist, neben den bestehenden Diensten auch Notfalldienste (Emergency Services) zu unterstützen. Die Notfalldienste sollen gewährleisten, dass ein Nutzer auch ohne gültige Anmeldung an dem angewählten Kommunikationsnetz Notfallnachrichten übermitteln kann.

Eine gültige Anmeldung an dem Kommunikationsnetz liegt nicht vor, wenn der Nutzer keine passenden Schlüssel zur Authentisierung am besuchten Kommunikationsnetz besitzt. Dies ist beispielsweise der Fall, wenn der Kommunikationsteilnehmer bei dem jeweiligen Netzbetreiber keine Anmeldung für das besuchte Kommunikationsnetz vorgenommen hat, oder der Netzbetreiber, mit dem der Kommunikationsteilnehmer eine Anmeldung vereinbart hat, kein Roaming Abkommen mit dem gerade besuchten Kommunikationsnetz hat.

Ein weiterer möglicher Grund für eine nicht vorliegende gültige Anmeldung an einem Kommunikationsnetz ist, wenn das Prepaid-Konto des betreffenden Kommunikationsteilnehmers leer oder nicht ausreichend geladen ist.

Üblicherweise erfolgt die Authentisierung eines Endgerätes beziehungsweise dessen Kommunikationsteilnehmers gemäß dem Stand der Technik dadurch, dass ein Authentisierungsserver (AAA-Client: Authentication Authorization and Accounting-Client) im Zugangsnetz (ASN: Access Serving Network) eine Anfragenachricht zur Authentisierung an den Authentisierungsserver im Heimnetz (CSN: Connectivity Service Network) stellt. Hierzu wird eine Netzwerkidentifizierung (NAI: Network Access Identifier) in der Authentisierungsnachricht von dem Endgerät an den Authentisierungsserver im Zugangsnetz übergeben. Die Netzwerkzugriffsidentifizierung weist eine Zeichenkette zur Kennzeichnung des Kommunikationsnetzanbieters (NSP: Network Service Provider) auf, bei dem der betreffende Kommunikationsteilnehmer eine Anmeldung vorgenommen hat. Zusätzlich ist in der Regel eine Zeichenkette zur Kennzeichnung des Teilnehmers enthalten. Anhand der Netzwerkzugriffsidentifizierung und der damit verfügbaren Information über den Kommunikationsnetzanbieter wird der Authentisierungsserver im Heimnetz des Kommunikationsteilnehmers gefunden. Für den Fall, dass keine gültige Anmeldung an einem Kommunikationsnetz vorliegt, bleibt dem Kommunikationsteilnehmer der Netzzugang verwehrt. In einem solchen Fall ist es für den Kommunikationsteilnehmer auch nicht möglich, Notrufe abzusetzen.

Die Druckschrift US 2006/030290 A1 offenbart die Identifikation von Notrufen eines Endgeräts in einem drahtlosen Kommunikationsnetz basierend auf Informationselementen in den vom Endgerät ausgesendeten Nachrichten.

Der vorliegenden Erfindung liegt die Aufgabe zugrunde, einem Kommunikationsteilnehmer im Falle einer nicht vorhandenen gültigen Anmeldung in einem Kommunikationsnetzwerk das Übermitteln von Notfallnachrichten zu ermöglichen. Erfindungsgemäß wird diese Aufgabe durch ein Verfahren und ein System mit den Merkmalen der Ansprüche 1 und 9 gelöst. Vorteilhafte Weiterbildungen der vorliegenden Erfindung sind in den abhängigen Ansprüchen beschrieben.

Entsprechend der vorliegenden Erfindung sind in einem Verfahren zum Weiterleiten von Notfallnachrichten eines Endgerätes (MS) in einem Kommunikationsnetz mit einem Zugangsnetz (ASN) die Notfallnachrichten des Endgeräts durch eine Netzwerkzugriffsidentifizierung (NAI) gekennzeichnet. Das Zugangsnetz (ASN) erkennt anhand der Netzwerkzugriffsidentifizierung (NAI) die Notfallnachrichten als solche und leitet diese an ein Notfallverbindungsnetz (Emergency-CSN) weiter. Ein wesentlicher Teil der Erfindung besteht demnach darin, die Notrufdienststellen als eigene Network-Service-Provider (NSP) und somit als eigenständige Verbindungsnetze (CSN) aufzufassen. Auf diese Weise wird erreicht, dass Notfallnachrichten auch ohne gültige Anmeldung in dem Kommunikationsnetz vom Zugangsnetz (ASN) an ein Notfallverbindungsnetz weitergeleitet werden. Hierzu werden beispielsweise gemäß der vorliegenden Erfindung eine oder mehrere Routen von Zugangsnetzen (ASN) zu Notfallverbindungsnetzen (Emergency-CSN) eingerichtet.

Gemäß der vorliegenden Erfindung ist durch einen Kommunikationsnetzbetreiber ein Nutzerprofil vorgebbar, anhand dessen Parameter für eine Kommunikationsverbindung zwischen dem Endgerät und dem Notfallverbindungsnetz (Emergency-CSN) festgelegt werden. Die Netzwerkzugriffsidentifizierung (NAI) enthält weitere Zeichen zur Kennzeichnung des vorgegebenen Nutzerprofils. Das Zugangsnetz (ASN) und/oder das Notfallverbindungsnetz (Emergency-CSN) ermitteln anhand der Netzwerkzugriffsidentifizierung (NAI) das vorgegebene Nutzerprofil. Dies hat die vorteilhafte Wirkung, dass einer Klasse von Kommunikationsteilnehmern beispielsweise ein QoS (Quality of Service) Dienst gewährt werden kann, mit dem die erforderliche Bandbreite zum Übermitteln eines Notrufes mittels Voice-over-IP-Service gewährleistet werden kann.

Ein Notfallverbindungsnetz (Emergency-CSN) ist eine logische Einheit, der besondere administrative Aufgaben zugewiesen werden. Zu diesen Aufgaben gehört nach einer Ausgestaltung der vorliegenden Erfindung, eine erfolgreiche Authentifizierung von Endgeräten durchzuführen, denen der Netzzugang nicht möglich ist oder verwehrt wurde und die einen Emergency Service nutzen möchten. Generell stellt ein Emergency-CSN ein oder mehrere Emergency Services zur Verfügung und gewährt den Endgeräten deren Nutzung. Hierzu informiert der Emergency-CSN den ASN entsprechend. Nach dem Stand der Technik umfasst ein CSN derzeit bereits Funktionalitäten, wie eine Adresszuweisung, insbesondere von IP-Adressen, an Endgeräte, Quality-of-Service bezogene Funktionen, oder eine AAA-Funktionalität zum Authentisieren und Autorisieren von Teilnehmern und zum Bereitstellen von teilnehmerbezogenen Informationen an das Zugangsnetz (ASN).

In einer weiteren vorteilhaften Ausgestaltung der vorliegenden Erfindung ist das Endgerät nicht in dem Kommunikationsnetz angemeldet. Der Authentisierungsserver (AAA) des Zugangsnetzes erkennt anhand der Netzwerkzugriffsidentifizierung (NAI) die Notfallnachrichten und meldet das Endgerät in dem Kommunikationsnetz an.

Rein vorsorglich sei darauf hingewiesen, dass im Sinne der Erfindung mit einem Authentisierungsserver auch ein Authentisierungsclient (AAA-client) umfasst ist, wie es aus Protokollsicht üblich ist.

Bei einer alternativen Ausführungsform des erfindungsgemäßen Verfahrens ist das Endgerät nicht in dem Kommunikationsnetz angemeldet. Das Zugangsnetz (ASN) erkennt anhand der Netzwerkzugriffsidentifizierung (NAI) die Notfallnachrichten und leitet an den Authentisierungsserver (AAA) des Notfallverbindungsnetzes (Emergency-CSN) die Notfallnachrichten weiter. Der Authentisierungsserver (AAA) des Notfallverbindungsnetzes (Emergency-CSN) meldet das Endgerät in dem Kommunikationsnetz an. Gemäß einer bevorzugten Ausgestaltung der vorliegenden Erfindung besteht die Netzwerkzugriffsidentifizierung (NAI) aus einer Zeichenkette zur Identifizierung des Endgerätes und aus einer Zeichenkette zur Adressierung des Notfallverbindungsnetzes (Emergency-CSN).

Nach einer weiteren Ausgestaltung der vorliegenden Erfindung ist das Endgerät in dem Kommunikationsnetz nicht angemeldet. Das Zugangsnetz (ASN) authentisiert und/oder autorisiert das Endgerät anhand einer Geräteidentifizierung (Device Authentication).

Gemäß einer bevorzugten Ausführungsform der vorliegenden Erfindung akzeptiert der Authentisierungsserver (AAA) des Notfallverbindungsnetzes (Emergency-CSN) Notfallnachrichten, die von einem vorher autorisierten Zugangsnetz (ASN) und/oder vorher autorisierte Authentisierungsserver (AAA) eines Zugangsnetzes (ASN) kommen.

In dem erfindungsgemäßen System zum Weiterleiten von Notfallnachrichten eines Endgerätes in einem Kommunikationsnetz sind die Notfallnachrichten des Endgerätes durch eine Netzwerkzugriffsidentifizierung (NAI) gekennzeichnet. Das System weist ein Zugangsnetz (ASN) auf, welches derart ausgestaltet ist, dass es anhand der Netzwerkzugriffsidentifizierung (NAI) die Notfallnachrichten als solche erkennt. Weiterhin weist das System ein Notfallverbindungsnetz (Emergency-CSN) auf, wobei das Zugangsnetz (ASN) derart ausgestaltet ist, dass es die erkannten Notfallnachrichten an das Notfallverbindungsnetz (Emergency-SN) weiterleitet. Das System zeichnet sich dadurch aus, dass durch einen Kommunikationsnetzbetreiber ein Nutzerprofil vorgebbar ist, anhand dessen Parameter für eine Kommunikationsverbindung zwischen dem Endgerät und dem Notfallverbindungsnetz (Emergency-CSN) festgelegt werden, dass die Netzwerkzugriffsidentifizierung (NAI) Zeichen zur Kennzeichnung des Nutzerprofils aufweist und dass das Zugangsnetz (ASN) und/oder das Notfallverbindungsnetz (Emergency-CSN) derart ausgestaltet sind, dass sie anhand der Netzwerkzugriffsidentifizierung (NAI) das vorgegebene Nutzerprofil ermitteln.

Die vorliegende Erfindung wird nachfolgend an Ausführungsbeispielen anhand der Zeichnungen näher erläutert. Es zeigt
- Figur 1: eine schematische Darstellung einer Anbindung eines Notfalldienstes in einem WiMAX-Kommunikationsnetz nach dem Stand der Technik,
- Figur 2: eine schematische Darstellung einer erfindungsgemäßen Anbindung eines Notfalldienstes in einem WiMAX-Kommunikationsnetz.

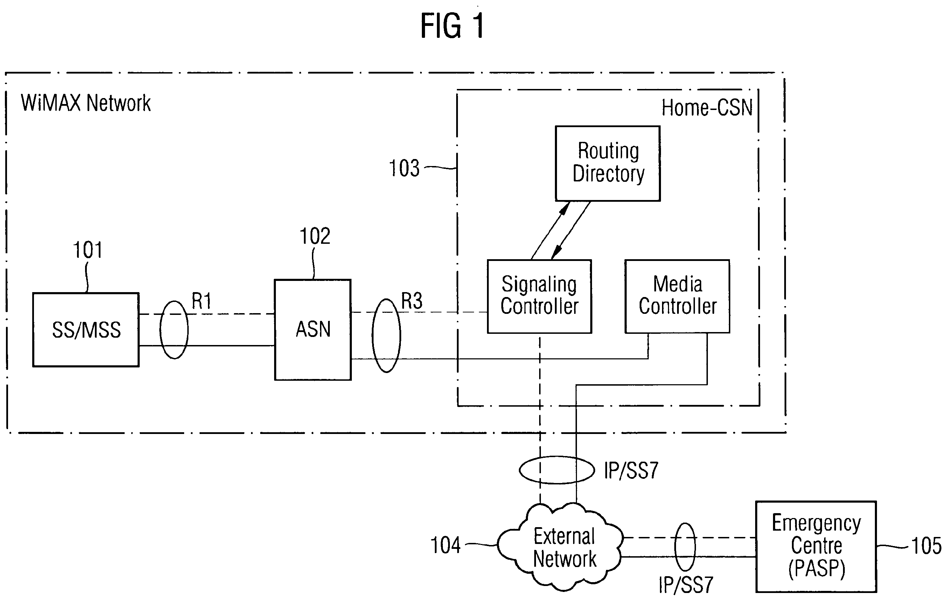

Die Figur 1 zeigt eine schematische Darstellung einer Anbindung eines Notfalldienstes in einem WiMAX-Kommunikationsnetz nach dem Stand der Technik. Ein mobiles Endgerät 101 ist über einen Verbindungspunkt R1 mit einem Zugangsnetz (ASN) 102 verbunden. Das Zugangsnetz (ASN) 102 wiederum ist über den Verbindungspunkt R3 mit einem Heimnetz (Home-CSN) 103 des mobilen Endgerätes 101 verbunden. Das Heimnetz (Home-CSN) 103 stellt nun über die Verbindungspunkte IP/SS7 eine Verbindung zu einem externen Kommunikationsnetz 104 außerhalb des WiMAX-Kommunikationsnetzes her, worüber eine Verbindung zu dem Notfalldienst 105 besteht. Falls der Nutzer des mobilen Endgerätes 101 keine gültige Authentisierung für das WiMAX-Kommunikationsnetz besitzt, würde er nach den bisher bekannten Verfahren erst gar nicht über das Zugangsnetz (ASN) 102 hinaus kommen, da er bereits durch das Zugangsnetz (ASN) 102 abgewiesen würde. In diesem Fall bestünde für den Nutzer des mobilen Endgerätes 101 keine Möglichkeit eine Notrufnachricht an den Notfalldienst 105 zu übermitteln.

In einer bestehenden Lösung müssen eingehende Notrufe von einem "Signaling Controller" erkannt werden und entsprechend einem Eintrag im "Routing Directory" an das zuständige Notrufzentrum weitergeleitet werden. Bei einer unterschiedlichen Ausprägung des Notrufdienstes im WiMAX-Netzwerk und dem Notrufzentrum kann es notwendig sein, dass der Dienst angepasst werden muss, um eine erfolgreiche Kommunikation zu ermöglichen. Diese Aufgabe wird in der Regel von einem "Media Controller" übernommen.

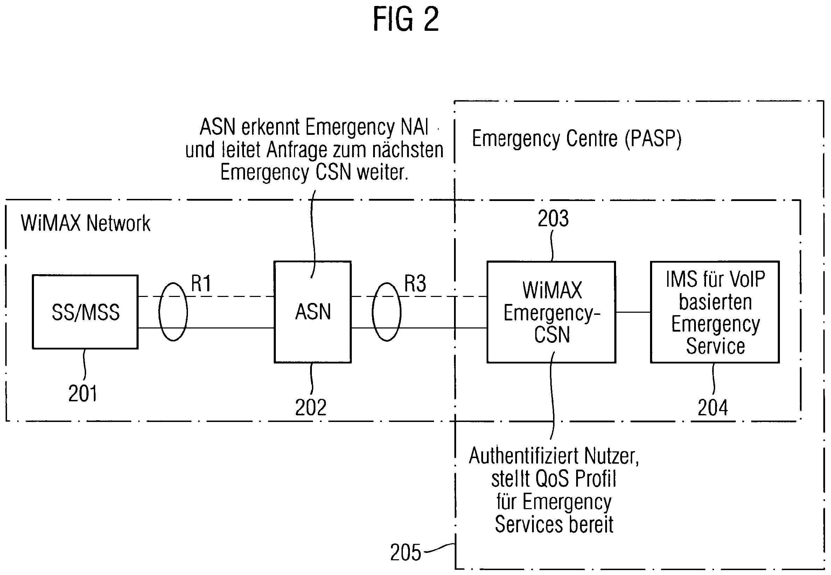

Die Figur 2 zeigt in einer schematischen Darstellung eine erfindungsgemäße Anbindung eines Notfalldienstes in einem WiMAX-Kommunikationsnetz. Ein mobiles Endgerät 201 ist über einen Verbindungspunkt R3 mit einem Zugangsnetz (ASN) 202 verbunden. Das Zugangsnetz (ASN) 202 wiederum ist über einen Verbindungspunkt R3 mit einem Notfallverbindungsnetz (Emergency-CSN) 203 verbunden, welches wiederum über eine IMS-Funktionalität 204 für Voice-over-IP-basierte Notfalldienste verfügt. Der Notfalldienst 105 aus Figur 1 wird demnach erfindungsgemäß als eigenständiger Network-Service-Provider für das WiMAX-Kommunikationsnetz aufgefasst und verfügt demzufolge über die für die Bereitstellung von Notfalldiensten notwendige CSN-Funktionalität.
Der Emergency-CSN kann dann ein oder mehrere Notfalldienste anbieten, die Teil des Emergency-CSNs sind oder daran angebunden sind. Als Beispiel kann ein IMS (IP-based Multimedia Subsystem) enthalten oder daran angebunden sein, welches die Möglichkeit eines Sprachservices (VoIP) anbietet, um einer Person den Notfall mitzuteilen.

Der Nutzer des mobilen Endgerätes 201 verfügt auch in diesem Ausführungsbeispiel über keine gültige Authentisierung für das WiMAX-Kommunikationsnetz. Übermittelt der Nutzer des mobilen Endgerätes 201 eine Notfallnachricht an das Zugangsnetz (ASN) 202, so sind die Notfallnachrichten durch eine Netzwerkzugriffsidentifizierung gekennzeichnet, wobei die Netzwerkzugriffsidentifizierung (NAI) Zeichen aufweist, mit denen die Notfallnachrichten als solche identifiziert werden können.

In einer möglichen Ausgestaltungsvariante für eine derartige Netzwerkzugriffsidentifizierung (NAI) wird diese aus der MAC-Adresse (Message Authentication Code) des mobilen Endgerätes und einer fixen Zeichenfolge für den Domain-Part zusammengesetzt. Diese fest vorgegebene Zeichenfolge ermöglicht dem Zugangsnetz (ASN) die Erkennung der Notfallnachricht. Eine mögliche Zeichenfolge für den Domain-Part ist beispielsweise "@emergency" oder "@wimax.emergency.com". In einer weiteren möglichen Ausgestaltung der Netzwerkzugriffsidentifizierung wird der Domain-Part verwendet, um beispielsweise verschiedene Klassen von Notfalldiensten zu unterscheiden. Eine solche mögliche Domain-Part-Zeichenfolge ist beispielsweise "@110.emergency" oder "@112.emergency".

Für Kommunikationsteilnehmer mit einer gültigen Authentisierung für das besuchte Kommunikationsnetz ist nach einer alternativen Ausgestaltung der Netzwerkzugriffsidentifizierung (NAI) eine Zeichenfolge vorgesehen, anhand derer der jeweilige Nutzer und/oder Netzwerk-Service-Provider ermittelbar ist. Eine solche Netzwerkzugriffsidentifizierung ist beispielsweise "{emergency}username@hdomain.com" oder "username@emergency.hdomain.com".

Anhand der Netzwerkzugriffsidentifizierung (NAI) erkennt das Zugangsnetz (ASN) 202 die Notfallnachricht und leitet die Notfallnachricht zum nächsten Notfallverbindungsnetz (Emergency-CSN) 203. Der Authentisierungsserver (AAA) des Notfallverbindungsnetzes (Emergency-CSN) 203 authentisiert den Nutzer des mobilen Endgerätes 201 anhand der Netzwerkzugriffsidentifizierung (NAI) und ermittelt zusätzlich anhand der Netzwerkzugriffsidentifizierung (NAI) ein Nutzerprofil des betreffenden Nutzers für den angeforderten Notfalldienst. Das ermittelte Nutzerprofil sieht in diesem Ausführungsbeispiel einen QoS-Dienst für diesen Nutzer vor, wodurch die erforderliche Bandbreite für einen Voice-over-IP-basierten Notfalldienst durch das Notfallverbindungsnetz bereitgestellt wird 204.

Durch das erfindungsgemäße Verfahren wird also gewährleistet, dass sich Endgeräte auch ohne gültige Anmeldung in ein WiMAX-Kommunikationsnetz einbuchen können, wenn ein Notfalldienst beansprucht wird. Weiterhin kann immer gewährleistet werden, dass einem Endgerät die notwendigen Quality-of-Serive-Resourcen zur Nutzung eines Notfalldienstes zur Verfügung gestellt werden können, da diese direkt vom Emergency-CSN autorisiert werden und nicht von einem Dritten, wie beispielsweise einem Netzbetreiber, autorisiert werden müssen.

Ein besonderer Vorteil des erfindungsgemäßen Verfahrens ist, dass nur geringe Adaptionen an einem WiMAX-Kommunikationsnetz und insbesondere an einem WiMAX-Zugangsnetz (ASN) notwendig sind, um Notfalldienste sowohl für Teilnehmer ohne gültige Netzwerkanmeldung als auch für Teilnehmer mit gültiger Netzwerkanmeldung zur Verfügung zu stellen. Durch die bereits bestehenden WiMAX-Funktionalitäten wird gewährleistet, dass der Datenverkehr eines Teilnehmers immer über ein Verbindungsnetz (CSN) und somit in diesem Fall immer über das Notfallverbindungsnetz (Emergency-CSN) geleitet wird.

Die vorliegende Erfindung ist nicht auf die hier beschriebenen Ausführungsbeispiele beschränkt.

## Patentansprüche

1. Verfahren zum Weiterleiten von Notfallnachrichten eines Endgerätes in einem Kommunikationsnetz mit einem Zugangsnetz (ASN), wobei
- die Notfallnachrichten des Endgerätes durch eine Netzwerkzugriffsidentifizierung (NAI) gekennzeichnet sind,
- das Zugangsnetz (ASN) anhand der Netzwerkzugriffsidentifizierung (NAI) die Notfallnachrichten als solche erkennt und an ein Notfallverbindungsnetz (Emergency-CSN) weiterleitet,
**dadurch gekennzeichnet, dass**
- durch einen Kommunikationsnetzbetreiber ein Nutzerprofil vorgebbar ist, anhand dessen Parameter für eine Kommunikationsverbindung zwischen dem Endgerät und dem Notfallverbindungsnetz (Emergency-CSN) festgelegt werden,
- die Netzwerkzugriffsidentifizierung (NAI) Zeichen zur Kennzeichnung des Nutzerprofils aufweist,
- das Zugangsnetz (ASN) und/oder das Notfallverbindungsnetz (Emergency-CSN) anhand der Netzwerkzugriffsidentifizierung (NAI) das vorgegebene Nutzerprofil ermitteln.

2. Verfahren nach Anspruch 1, wobei
das Kommunikationsnetz ein so genannten WiMAX-, Worldwide Interoperability for Microwave Access) Funknetzwerk ist.

3. Verfahren nach Anspruch 1, wobei
- das Endgerät nicht in dem Kommunikationsnetz angemeldet ist,
- der Authentisierungsserver (AAA) des Zugangsnetzes (ASN) anhand der Netzwerkzugriffsidentifizierung (NAI) die Notfallnachrichten erkennt und das Endgerät in dem Kommunikationsnetz anmeldet.

4. Verfahren nach Anspruch 1, wobei
- das Endgerät nicht in dem Kommunikationsnetz angemeldet ist,
- das Zugangsnetz (ASN) anhand der Netzwerkzugriffsidentifizierung (NAI) die Notfallnachrichten erkennt und an den Authentisierungsserver (AAA) des Notfallverbindungsnetzes weiterleitet,
- der Authentisierungsserver (AAA) des Notfallverbindungsnetzes (Emergency-CSN) das Endgerät in dem Kommunikationsnetz anmeldet.

5. Verfahren nach Anspruch 1, wobei
die Netzwerkzugriffsidentifizierung (NAI) aus einer Zeichenkette zur Identifizierung des Endgerätes und aus einer Zeichenkette zur Adressierung des Notfallverbindungsnetzes (Emergency-CSN) besteht.

6. Verfahren nach Anspruch 1, wobei
- das Endgerät in dem Kommunikationsnetz angemeldet ist,
- das Zugangsnetz (ASN) anhand der Netzwerkzugriffsidentifizierung (NAI) die Notfallnachrichten erkennt und an das Notfallverbindungsnetz (Emergency-CSN) weiterleitet.

7. Verfahren nach Anspruch 1, wobei
- das Endgerät in dem Kommunikationsnetz nicht angemeldet ist,
- das Zugangsnetz (ASN) anhand einer Geräteidentifizierung (Device Authentication) das Endgerät authentisiert und/oder autorisiert.

8. Verfahren nach Anspruch 1, wobei
der Authentisierungsserver (AAA) des Notfallverbindungsnetzes (Emergency-CSN) Notfallnachrichten akzeptiert, die von einem vorher autorisierten Zugangsnetz (ASN) und/oder vorher autorisierten Authentisierungsserver (AAA) eines Zugangsnetzes (ASN) kommen.

9. System zum Weiterleiten von Notfallnachrichten eines Endgerätes in einem Kommunikationsnetz, wobei die Notfallnachrichten des Endgerätes durch eine Netzwerkzugriffsidentifizierung (NAI) gekennzeichnet sind, mit
- einem Zugangsnetz (ASN), welches derart ausgestaltet ist, dass es anhand der Netzwerkzugriffsidentifizierung (NAI) die Notfallnachrichten als solche erkennt und
- einem Notfallverbindungsnetz (Emergency-CSN), wobei das Zugangsnetz (ASN) ferner derart ausgestaltet ist, dass es die erkannten Notfallnachrichten an das Notfallverbindungsnetz (Emergency-CSN) weiterleitet,
**dadurch gekennzeichnet, dass**
- durch einen Kommunikationsnetzbetreiber ein Nutzerprofil vorgebbar ist, anhand dessen Parameter für eine Kommunikationsverbindung zwischen dem Endgerät und dem Notfallverbindungsnetz (Emergency-CSN) festgelegt werden,
- die Netzwerkzugriffsidentifizierung (NAI) Zeichen zur Kennzeichnung des Nutzerprofils aufweist,
- das Zugangsnetz (ASN) und/oder das Notfallverbindungsnetz (Emergency-CSN) derart ausgestaltet sind, dass sie anhand der Netzwerkzugriffsidentifizierung (NAI) das vorgegebene Nutzerprofil ermitteln.

## Claims

1. Method for forwarding emergency messages from a terminal in a communication network with an access network (ASN), wherein
- the emergency messages of the terminal are identified by a network access identifier (NAI),
- the access network (ASN) recognises the emergency messages as such on the basis of the network access identifier (NAI) and forwards them to an emergency connectivity services network (emergency CSN),
**characterised in that**
- a user profile is able to be predetermined by a communication network provider, on the basis of which parameters for a communication link between the terminal and the emergency connectivity services network (emergency CSN) are determined,
- the network access identifier (NAI) features characters for identification of the user profile,
- the access network (ASN) and/or the emergency connectivity services network (emergency CSN) establish the predetermined user profile on the basis of the network access identifier (NAI).

2. Method according to claim 1, wherein
the communication network is a so-called WiMAX (Worldwide Interoperability for Microwave Access) radio network.

3. Method according to claim 1, wherein
- the terminal is not registered in the communication network,
- the authentication server (AAA) of the access network (ASN) recognises the emergency message on the basis of the network access identifier (NAI) and registers the terminal in the communication network.

4. Method according to claim 1, wherein
- the terminal is not registered in the communication network,
- the access network (ASN) recognises the emergency messages on the basis of the network access identifier (NAI) and forwards them to the authentication server (AAA) of the emergency connectivity services network,
- the authentication server (AAA) of the emergency connectivity services network (emergency CSN) registers the terminal in the communication network.

5. Method according to claim 1, wherein
the network access identifier (NAI) consists of a character string for identifying the terminal and a character string for addressing the emergency connectivity services network (emergency CSN).

6. Method according to claim 1, wherein
- the terminal is registered in the communication network,
- the access network (ASN) recognises the emergency messages on the basis of the network access identifier (NAI) and forwards them to the emergency connectivity services network (emergency CSN).

7. Method according to claim 1, wherein
- the terminal is not registered in the communication network,
- the access network (ASN) authenticates and/or authorises the terminal on the basis of a device authentication.

8. Method according to claim 1, wherein
the authentication server (AAA) of the emergency connectivity services network (emergency CSN) accepts emergency messages which come from a previously authorised access network (ASN) and/or a previously authorised authentication server (AAA) of an access network (ASN).

9. System for forwarding emergency messages from a terminal in a communication network, wherein the emergency messages of the terminal are identified by a network access identifier (NAI), with
- an access network (ASN) which is embodied such that it recognises the emergency messages as such on the basis of the network access identifier (NAI), and
- an emergency connectivity services network (emergency CSN), wherein the access network (ASN) is further embodied such that it forwards the recognised emergency messages to the emergency connectivity services network (emergency CSN), **characterised in that**
- a user profile is able to be predetermined by a communication network provider, on the basis of which parameters for a communication link between the terminal and the emergency connectivity services network (emergency CSN) are determined,
- the network access identifier (NAI) features characters for identification of the user profile,
- the access network (ASN) and/or the emergency connectivity services network (emergency CSN) are embodied such that they establish the predetermined user profile on the basis of the network access identifier (NAI).

## Revendications

1. Procédé de retransmission de messages d'urgence d'un terminal dans un réseau de communication avec un réseau d'accès (ASN),
- les messages d'urgence du terminal étant marqués par une identification d'accès au réseau (NAI),
- le réseau d'accès (ASN) reconnaissant les messages d'urgence en tant que tels à l'aide de l'identification d'accès au réseau (NAI) et les retransmettant à un réseau de connexion d'urgence (Emergency-CSN), **caractérisé en ce que**
- un profil d'utilisateur à l'aide duquel sont déterminés des paramètres pour une liaison de communication entre le terminal et le réseau de connexion d'urgence (Emergency-CSN) peut être spécifié par un gestionnaire de réseau de communication,
- l'identification d'accès au réseau (NAI) comporte des caractères pour le marquage du profil d'utilisateur,
- le réseau d'accès (ASN) et/ou le réseau de connexion d'urgence (Emergency-CSN) déterminent le profil d'utilisateur spécifié à l'aide de l'identification d'accès au réseau (NAI).

2. Procédé selon la revendication 1, le réseau de communication étant ce qu'il est convenu d'appeler un réseau radio WiMAX (Worldwide Interoperability for Microwave Access).

3. Procédé selon la revendication 1,
- le terminal n'étant pas connecté au réseau de communication,
- le serveur d'authentification (AAA) du réseau d'accès (ASN) reconnaissant les messages d'urgence à l'aide de l'identification d'accès au réseau (NAI) et connectant le terminal au réseau de communication.

4. Procédé selon la revendication 1,
- le terminal n'étant pas connecté au réseau de communication,
- le réseau d'accès (ASN) reconnaissant les messages d'urgence à l' aide de l' identification d'accès au réseau (NAI) et les retransmettant au serveur d'authentification (AAA) du réseau de connexion d'urgence,
- le serveur d'authentification (AAA) du réseau de connexion d'urgence (Emergency-CSN) connectant le terminal au réseau de communication.

5. Procédé selon la revendication 1, l'identification d'accès au réseau (NAI) consistant en une chaîne de caractères pour l'identification du terminal et d'une chaîne de caractères pour l'adressage du réseau de connexion d'urgence (Emergency-CSN).

6. Procédé selon la revendication 1,
- le terminal étant connecté au réseau de communication,
- le réseau d'accès (ASN) reconnaissant les messages d'urgence à l' aide de l' identification d'accès au réseau (NAI) et les retransmettant au réseau de connexion d'urgence (Emergency-CSN).

7. Procédé selon la revendication 1,
- le terminal n'étant pas connecté au réseau de communication,
- le réseau d'accès (ASN) authentifiant et/ou autorisant le terminal à l'aide d'une identification d'appareil (Device Authentication).

8. Procédé selon la revendication 1, le serveur d'authentification (AAA) du réseau de connexion d'urgence (Emergency-CSN) acceptant des messages d'urgence venant d'un réseau d'accès (ASN) préalablement autorisé et/ou d'un serveur d'authentification (AAA) d'un réseau d'accès (ASN) préalablement autorisé.

9. Système de retransmission de messages d'urgence d'un terminal dans un réseau de communication, les messages d'urgence du terminal étant marqués par une identification d'accès au réseau (NAI), comportant :
- un réseau d'accès (ASN) qui est conçu de manière à reconnaître les messages d'urgence en tant que tels à l'aide de l'identification d'accès au réseau (NAI) et
- un réseau de connexion d'urgence (Emergency-CSN), le réseau d'accès (ASN) étant en outre conçu pour retransmettre les messages d'urgence reconnus au réseau de connexion d'urgence (Emergency-CSN),
**caractérisé en ce que**
- un profil d'utilisateur à l'aide duquel sont déterminés des paramètres pour une liaison de communication entre le terminal et le réseau de connexion d'urgence (Emergency-CSN) peut être spécifié par un gestionnaire de réseau de communication,
- l'identification d'accès au réseau (NAI) comporte des caractères pour le marquage du profil d'utilisateur,
- le réseau d'accès (ASN) et/ou le réseau de connexion d'urgence (Emergency-CSN) sont conçus de manière à déterminer le profil d'utilisateur spécifié à l'aide de l'identification d'accès au réseau (NAI).
